# EUROPEAN PATENT APPLICATION

(11) **EP 1 921 826 A1**
(43) Date of publication of application: **14.05.2008**
(21) Application number: 07380305.8
(22) Date of filing: 06.11.2007
(51) Int. Cl.: H04L 29/08, G06F 9/46, G06F 9/48

(54) **Process and system for managing terminals by means of mobile agents**

(30) Priority: 06.11.2006 ES 200602810
(71) Applicant: Vodafone Group PLC, Newbury Berkshire RG14 2FN (GB); Vodafone España, S.A., 28108 Alcobendas (Madrid) (ES)
(72) Inventor: Berna Forniés, Héctor, 50018 Zaragoza (ES)
(74) Representative: Carpintero Lopez, Francisco

(57) **Abstract**

Method for managing terminals of an IP network comprising at least one terminal, wherein said at least one terminal in turn comprises an agent platform and at least one piece of data about the terminal itself, characterized by comprising the steps of: in a diagnosis mobile agent server, creating a diagnosis mobile agent comprising at least one piece of information about a terminal of the network; sending said diagnosis mobile agent to said terminal; executing said diagnosis mobile agent in said terminal such that at least one piece of data about the terminal is obtained; comparing said at least one piece of data with the information comprised in the diagnosis mobile agent. In the event that the result of the diagnosis is negative, the method also comprises repairing, by means of mobile agents, the erroneous information. Terminal, servers, network and system.

## Description

### FIELD OF THE INVENTION

The present invention is applied to the communications network field, and more specifically to the management (diagnosis and repair) of terminal devices in communications networks by means of mobile agents.

### BACKGROUND OF THE INVENTION

An intelligent agent is a software entity carrying out certain activities on behalf of another entity and having a certain degree of autonomy in its actions, sociability with other agents, reactivity against situations of the environment and proactivity in carrying out its function. In other words; it is intelligent, it can learn from experience, memorize data and situations, deduce conclusions; it is autonomous, its life cycle is monitored and it makes its own decisions; it is reactive, it can interact with its environment; it is mobile, it can move to other locations, it is cooperative, it can cooperate with other agents or systems.

A mobile agent is an intelligent agent which can migrate or move between different locations. As can be deduced from this definition, the term "mobile" of the expression "mobile agent" is not limited to the scope of mobile telephony or wireless communications, but rather it is applied to any type of computer or telecommunications network and indicates that said agent can migrate or move between different locations.

A mobile agent provides certain technical advantages:
- Reduction of data transmission through the network for client-server applications when partial results involve a large amount of data, since the mobile agent can travel to the service provider carrying out the complete task and returning with the end result.
- Reduction of the impact on the network disconnections, since the mobile agent travels to the destination carrying out a task locally and the agent itself manages its return.
- Autonomous activities which may persist being performed despite a possible failure in the host server.
- Use of services and resources that other elements in the network (more powerful processors, algorithms, databases, hardware, etc...) provide.
- Coordination of actions between several agents.

Despite their autonomy and capacity to move, mobile agents need the support of an agent platform (also called agent framework) providing them with the basic services within the system of agents to which they belong. An agent platform is thus defined as the support providing basic services to the mobile agents within the system of agents to which they belong. A directory of mobile agents, the persistence of mobile agents, the communication between different elements of the platform or the management of the life cycle of the agent, for example, can be mentioned among such services.

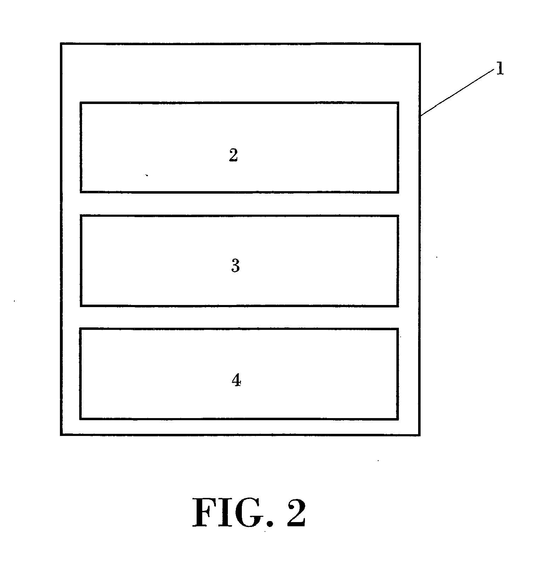

A mobile agent is structured in several fields. Figure 2 shows the conventional structure (1) of a mobile agent, comprising the following fields:
- Mobile agent code (3), comprising the binary or executable code which allows executing the mobile agent.
- Mobile agent identifier (2), comprising the unique identifier of a mobile agent.
- Additional mobile agent data (4), comprising necessary information for the execution of the mobile agent.

The FIPA (Foundation for Intelligent Physical Agents) is the organization formed with the aim of producing standard specifications for agents and agent-based systems, including mobile agents. It currently depends on the Standards Committee of the IEEE Computer Society. The FIPA specifications represent a collection of standards attempting to promote interoperability between heterogeneous agents and the services they may represent.

In addition, the terminals registered in a network have an unequivocally assigned URI address. The URI (Uniform Resource Identifier) consists of a short text unequivocally identifying generally any accessible resource (service, page, document, e-mail address, encyclopedia,...) in a network. A URI normally consists of two parts: an identifier of the method for accessing the resource (i.e., the protocol identifier) and the resource name, according to RFC 2396 specifications.

Finally, processes for managing and diagnosing telecommunications services such as telephony, messaging, Internet connection in both fixed and mobile telecommunications networks are known. Thus, for example, when a client detects a problem or a possible problem related to a service to which he or she is subscribed, the client calls a customer service telephone number of the operator providing the telecommunications service. The operator then searches for the activities carried out by said client in the telecommunications network registers for the purpose of finding the problem detected by the client. The cause of the problem is occasionally located in the telecommunications network and the operator finds it and solves it. On other occasions, the cause of the problem is located in the terminal device. The operator is only the owner of and only has access to its own telecommunications network and therefore, the activity taking place in the device of the client is not registered in the telecommunications network. In this case, the operator can neither find it nor therefore solve it.

### OBJECT OF THE INVENTION

The object of this invention is to solve the aforementioned problems by means of diagnosing and repairing incidents in terminal devices using mobile agents.

One of the aspects of this invention thus relates to a method for managing terminals of an IP network comprising at least one terminal, in which said at least one terminal in turn comprises an agent platform and at least one piece of data about the terminal itself, which method comprises the steps of: in a diagnosis mobile agent server, creating a diagnosis mobile agent comprising at least one piece of information about a terminal of the network; sending said diagnosis mobile agent to said terminal; executing said diagnosis mobile agent in said terminal such that at least one piece of data about the terminal is obtained; comparing said at least one piece of data with the information comprised in the diagnosis mobile agent.

Said information comprised in the diagnosis mobile agent is preferably downloaded from information storage means.

Said step of sending said diagnosis mobile agent to said terminal comprises the step of assigning to a field of the diagnosis mobile agent an identifier of the agent platform of the terminal, which identifier is preferably a uniform resource identifier, which can comprise information of the IP addresses assigned to the terminal and diagnosis mobile agent server.

In said method, if the result of said comparison indicates that all the information comprised in the diagnosis mobile agent is the same as all the data of the terminal, the diagnosis mobile agent notifies the user of the terminal and the operator providing the services to the terminal of the result of the diagnosis and dies.

If, on the contrary, the result of said comparison indicates that at least one piece of information comprised in the diagnosis mobile agent is different from the corresponding piece of data of the terminal, the diagnosis mobile agent notifies the user of the terminal and the operator providing the services to the terminal of the result of the diagnosis, and in a repairing mobile agent server, both repairing mobile agents and different pieces of information that have been obtained in said comparison are created, in which each repairing mobile agent comprises one piece of information about the aspect the comparison of which in the diagnosis has been negative; said at least one repairing mobile agent is sent to said terminal; said at least one repairing mobile agent is executed in said terminal such that the information comprised in each of the at least one repairing mobile agent is loaded in the terminal, substituting the incorrect piece of data.

Said information comprised in the repairing mobile agent is preferably downloaded from information storage means.

Said step of sending said at least one repairing mobile agent to said terminal comprises the step of assigning to a field of the repairing mobile agent an identifier of the agent platform of the terminal, which identifier is preferably a uniform resource identifier, which can comprise information of the IP addresses assigned to the terminal and repairing mobile agent server.

Said information storage means preferably comprise an information database or repository.

Said information about the terminal preferably comprises information about at least one of the following aspects: the terminal configuration settings, the terminal operational parameters, software parameters and installation, firmware and software updates, application settings or user preferences.

Another aspect of this invention is about a terminal for an IP network comprising: at least one mobile agent platform; means designed to execute at least one diagnosis or repairing mobile agent in said mobile agent platform, as well as an IP network comprising at least one of said terminals.

Another aspect of this invention is about a diagnosis mobile agent server comprising: a mobile agent platform; connecting means for the connection to an IP network; means for creating at least one diagnosis mobile agent which can be sent through said connecting means to a terminal connected to said IP network. The server preferably further comprises means for accessing information storage means.

Another aspect of this invention is about a repairing mobile agent server comprising: a mobile agent platform; IP network connecting means; means for creating at least one repairing mobile agent which can be sent through said connecting means to a terminal connected to said IP network. The server preferably further comprises means for accessing information storage means.

Finally, another aspect of this invention includes a system comprising: an IP network; a plurality of terminals; a diagnosis mobile agent server like the previous one, as well as, preferably, a repairing mobile agent server like the one mentioned above.

### BRIEF DESCRIPTION OF THE DRAWINGS

With the aim of aiding to better understand the features of the invention according to a preferred practical embodiment thereof and to complement this description, a set of illustrative and non-limiting drawings is attached as an integral part thereof. In these drawings:
Figure 1 shows the architecture of a system according to this invention.
Figure 2 shows the conventional structure of a mobile agent.
Figure 3 shows the structure of a diagnosis mobile agent according to an embodiment of this invention.
Figure 4 shows the structure of a repairing mobile agent according to an embodiment of this invention.
Figure 5 shows the conventional structure of an agent platform or mobile agent identifier.

### DETAILED DESCRIPTION OF THE INVENTION

The following definitions must be taken into account in the context of this invention:

Device information: Data of a device which can be retrieved by a diagnosis mobile agent and updated and managed by a repairing mobile agent. Six types of device information are known: configuration settings, operational parameters, software parameters and installation, firmware and software updates, application settings and user preferences. In the future, there may be more pieces of device information other than those mentioned, related to any type of data which can be retrieved, updated and managed by an agent that is external to those data. This invention is not only limited to currently known pieces of device information, but to any other information that may be known in the future.

Diagnosis mobile agent: It is a mobile agent which is sent by the operator to a device and carries out a complete diagnosis of the following information: configuration settings, operational parameters, software parameters and installation, firmware and software updates, application settings and user preferences. The diagnosis mobile agent compares this diagnosis with the information that the operator has about that device and, depending on whether there is any difference with the information collected from the operator, orders sending said device of the repairing mobile agent necessary for managing and repairing that difference of information in the device. In the future, the diagnosis mobile agent can carry out a diagnosis of other pieces of device information different from those mentioned above. This invention is not only limited to currently known pieces of device information, but to any other diagnosis operation that may be known in the future.

Repairing mobile agent: It is a mobile agent which is sent to a device by a diagnosis mobile agent to manage and repair the difference found by the diagnosis mobile agent in the device. Six types of repairing mobile agent are currently known: repairing agent for configuration settings, repairing agent for operational parameters, repairing agent for software parameters and installation, repairing agent for firmware and software updates, repairing agent for application settings and repairing agent for user preferences. Given that this invention is not only limited to repairing operations related to currently known diagnosis operations, but to any other repairing operation which can arise or be necessary in the future, a generic repairing mobile agent is defined for future repairs or managements related to other pieces of device information.

Device information repository: It is a database in which the pieces of device information of the operator are saved. This information saved by the repository is formed by the configuration settings, operational parameters, software parameters and installation, firmware and software updates, application settings and user preferences. In the future, the device information repository can store other pieces of device information different from those mentioned above.

Diagnosis mobile agent server: It is a server comprising a plurality of diagnosis mobile agents and which can create them and send them to the devices which are to be diagnosed. The creation and notification of the order for sending a diagnosis mobile agent to a specific device does not correspond to this invention. The following is one possible example: a client calls the customer service telephone number of the operator requesting a diagnosis. The telephone operator then generates the order of sending the corresponding diagnosis mobile agent to the device of the client which has called.

Repairing mobile agent server: It is a server comprising a plurality of repairing mobile agents for each type of information to be repaired. Upon the request of a diagnosis mobile agent, it can create the specific repairing mobile agents according to the indications of the diagnosis mobile agent and send them to the devices which must be repaired and managed. The repairing mobile agent server currently sends one of the following types of repairing mobile agent: repairing agent for configuration settings, repairing agent for operational parameters, repairing agent for software parameters and installation, repairing agent for firmware and software updates, repairing agent for application settings and repairing agent for user preferences. This invention is not only limited to repairing operations related to currently known diagnosis operations, but to any other repairing operation which can arise or be necessary in the future, therefore this invention also relates to any other type of repairing mobile agents that arise in the future.

Throughout this specification, the term "comprise" and its derivatives must not be interpreted in an exclusive or limiting sense, i.e., it must not be interpreted in the sense of excluding the possibility that the element or concept which it refers to includes additional elements or steps.

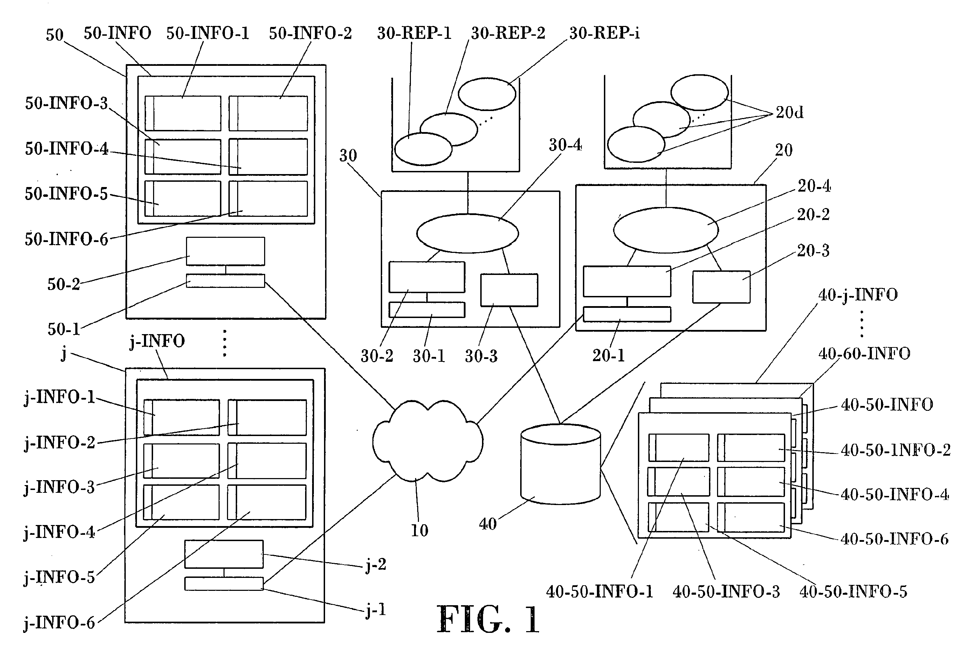

Figure 1 shows a possible network architecture of the system of this invention. This architecture is formed by an IP network (10) to which there is connected a diagnosis mobile agent server (20), a repairing mobile agent server (30) as well as a plurality of terminal devices (50, 60, ..., j). The two servers (20, 30) are further connected to a terminal device information database or repository (40). The two servers (20, 30) and the database or repository (40) belong to a certain telecommunications service operator, such as a service for accessing the paquet switch domain (PS), such as for example: the GSM/GPRS network or UMTS, WiMAX, or access networks such as RDSI, ADSL, etc.

The diagnosis mobile agent server (20) is enabled for executing mobile agents. To that end, the diagnosis mobile agent server (20) comprises a mobile agent platform (20-2). The diagnosis mobile agent server (20) can connect to the IP network (10) through an IP connection interface (20-1) comprised in the server itself, which in turn comprises a connection to said mobile agent platform (20-2). The diagnosis mobile agent server (20) further comprises a repository access element (20-3) to collect the information of the devices from the device information database or repository (40). The diagnosis mobile agent server (20) further comprises means (20-4) for creating diagnosis mobile agents and for sending to the terminal devices (50, 60, ..., j) through the mobile agent platform (20-2), comprising in turn a connection to the mobile agent platform (20-2), another connection to the repository access (20-3) and another connection to diagnosis mobile agents (20-d) which are described below. The means (20-4) for creating and sending diagnosis mobile agents have a mobile agent nature, i.e., they behave like a mobile agent because it is identified within the IP network (10) by an agent identifier (which is described below in relation to Figure 2) and can interact with other agents and agent platforms of the network (10). When the means (20-4) for creating and sending diagnosis mobile agents receive a notification of an order for sending a diagnosis mobile agent (20-d) to a specific device (50, 60, ..., j), they can create diagnosis mobile agents (20-d), load them with the information of the devices (50, 60, ..., j) using the repository access (20-3), and send them to the devices (50, 60, ..., j) of the network which is to be diagnosed through the mobile agent platform (20-2) and the latter in turn through the IP connection (20-1).

The repairing mobile agent server (30) is enabled for executing mobile agents. To that end, the repairing mobile agent server (30) comprises a mobile agent platform (30-2). The repairing mobile agent server (30) can connect to the IP network (10) through an IP connection interface (30-1) comprised in the server itself, which in turn comprises a connection to said mobile agent platform (30-2). The repairing mobile agent server (30) further comprises a repository access element (30-3) to collect the information of the devices from the device information database or repository (40). The repairing mobile agent server further comprises means (30-4) for creating repairing mobile agents and for sending to the terminal devices (50, 60, ..., j) through the mobile agent platform (30-2), comprising in turn a connection to the mobile agent platform (30-2), another connection to the repository access (30-3) and another connection to repairing mobile agents (30-REP-i), which are described below. The means (30-4) for creating and sending repairing mobile agents have a mobile agent nature, i.e., they behave like a mobile agent because it is identified within the IP network (10) by an agent identifier (which is described below in relation to Figure 2) and can interact with other agents and agent platforms of the network (10). When the means (30-4) for creating and sending repairing mobile agents receive a notification of the order for sending a specific repairing mobile agent (30-REP-i) to a specific device (50, 60, ..., j), they can create repairing mobile agents (30-REP-1, 30-REP-2, ..., 30-REP-i), each of which can repair a certain type of information associated to the terminal devices (50, 60, ..., j). After creating the repairing mobile agents (30-REP-i), which are described below, the means (30-4) for creating and sending repairing mobile agents load the information of the devices (50, 60, ..., j) using the repository access (30-3) and send them to the terminal devices (50,60, ..., j) which are to be repaired through the mobile agent platform (30-2) and the latter in turn through the IP connection (30-1).

Each terminal device (50, 60,..., j), which hereinafter will simply be referred to as "terminal" (50, 60,..., j), is enabled for executing mobile agents. To that end, each terminal (50, 60, ..., j) comprises a mobile agent platform (50-2). Each terminal (50, 60...) can connect to the IP network (10) through an IP connection interface (50-1, 60-1, ..., j-1) comprised in the terminal itself, which in turn comprises a connection to said mobile agent platform (50-2, 60-2, ..., j-2). Each terminal (50, 60, j) further comprises a group of registers comprising pieces of information of the terminal itself, such as configuration settings (50-INFO-1, 60-INFO-1, ..., j-INFO-1), operational parameters (50-INFO-2, 60-INFO-2, ..., j-INFO-2), software parameters and installation (50-INFO-3, 60-INFO-3, ..., j-INFO-3), firmware and software updates (50-INFO-4, 60-INFO-4, ..., j-INFO-4), application settings (50-INFO-5, 60-INFO-5, ..., j-INFO-5) and user preferences (50-INFO-6, 60-INFO-6, ..., j-INFO-6).

Finally, the terminal information database or repository (40) comprises the pieces of information (40-50-INFO: 40-50-INFO-1, 40-50-INFO-2, 40-50-INFO-3, 40-50-INFO-4, 40-50-INFO-5, 40-50-INFO-6; 40-60-INFO: 40-60-INFO-1, 40-60-INFO-2, 40-60-INFO-3, 40-60-INFO-4, 40-60-INFO-5, 40-60-INFO-6; ...; 40-j-INFO: 40-j-INFO-1, 40-j-INFO-2, 40-j-INFO-3, 40-j-INFO-4, 40-j-INFO-5, 40-j-INFO-6;) that the operator has of each terminal (50, 60, ..., j).

Each agent platform (50-2, 60-2..., j-2) of the terminals (50, 60..., j) and the agent platforms (30-2 and 20-2) of the repairing agent (30) and diagnosis agent (20) servers, respectively, has an assigned uniform resource identifier URI. In the service for diagnosing and managing terminals, this URI identifier URI of each platform allows unequivocally identifying the terminal (50, 60, ..., j), the repairing agent server (30) or the diagnosis agent server (20) which the agent platform identified by said URI belongs to.

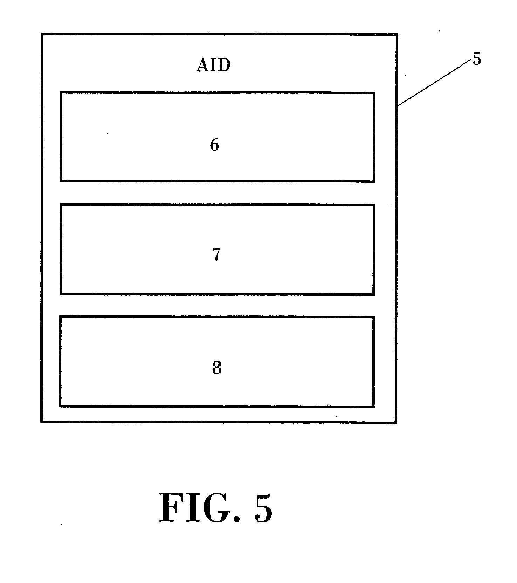

Figure 5 shows the conventional structure of a mobile agent identifier (AID) (5). This structure is identical to that of an agent platform identifier, since an agent platform is identified as one more agent within a system or network. In a minimal configuration, the agent platform or mobile agent identifier (AID) (5) comprises a single field called name (6). As shown in Figure 5, the structure of the agent platform or mobile agent identifier (AID) (5) can further comprise several optional fields, such as addresses (7) and/or resolvers (8). The name (6) is a global unique identifier which can be used as a unique reference expression of the mobile agent or of the agent platform.

In this invention, the URI identifier of each terminal device (50, 60..., j), repairing agent server (30) or diagnosis agent server (20) is assigned in the address field (7) of the identifier (5) of each agent platform (20-2, 30-2, 50-2, 60-2, ..., j-2).

The process for diagnosing and managing terminals of this invention is as follows:

The means (20-4) for creating and sending diagnosis mobile agents of the diagnosis mobile agent server (20) first receive an order for sending a diagnosis mobile agent (20-d) to a certain terminal (50) of the IP network (10). The URI identifier of the terminal (50) to be diagnosed is provided in this order. The cause for which the server (20) receives this order for sending a diagnosis mobile agent to a terminal is outside the scope of this invention. An example of a cause for which the server (20) receives said order is that a client of the telecommunications service operator calls, by telephone, the customer service of the operator, requesting a certain diagnosis. In that case, as a result of said request by a client, the operator generates an order for sending a diagnosis mobile agent to the terminal (50) of the client who has called.

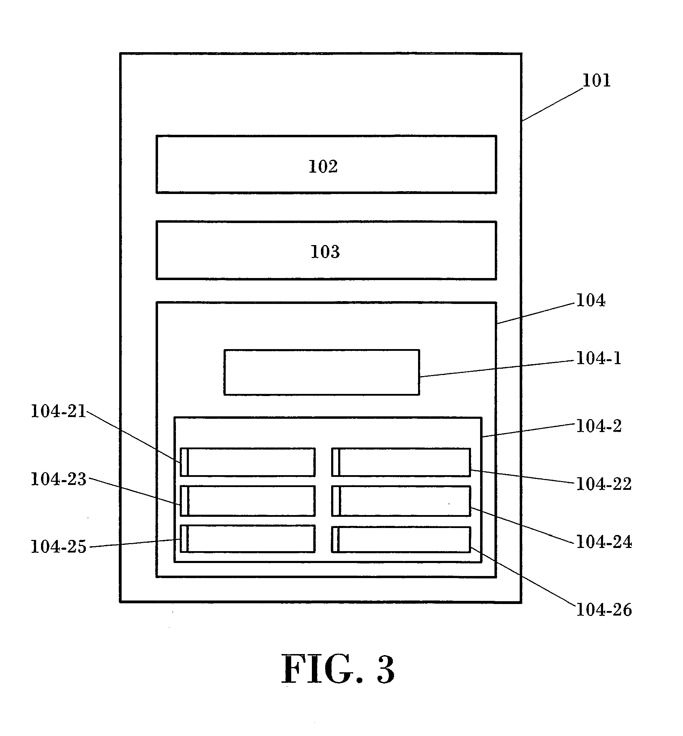

The means (20-4) for creating and sending diagnosis mobile agents of the diagnosis mobile agent server (20) then create a diagnosis mobile agent (20-d). Figure 3 shows the structure (101) of a diagnosis mobile agent (20-d). Like the conventional structure (1) of a mobile agent shown in Figure 2, the structure (101) of a diagnosis mobile agent comprises a "code" field (103) of the diagnosis mobile agent, an "identifier" field (102) of the diagnosis mobile agent and an "additional data" field (104) of the diagnosis mobile agent, comprising necessary information for executing the diagnosis mobile agent.

As shown in Figure 3, the "additional data" field (104) in turn comprises a first "terminal URI identifier" field (104-1), to which the URI identifier of the terminal to be diagnosed is assigned, to which the diagnosis mobile agent is directed, and a second "terminal information" field (104-2). This field (104-1) in turn comprises subfields (104-21, 104-22, 104-23, 104-24, 104-25, 104-26) designed to comprise the pieces of information of a terminal (50) which the operator has stored in the terminal information database or repository (40). In an embodiment of this invention, these fields are designed to comprise the following pieces of information: configuration settings of said terminal in a first subfield (104-21), operational parameters of said terminal in a second subfield (104-22), software parameters and installation of the terminal in a third subfield (104-23), firmware and software updates of the terminal in a fourth subfield (104-24), application settings of the terminal in a fifth subfield (104-25), and user preferences of the terminal in a sixth subfield (104-26).

The means (20-4) for creating and sending diagnosis mobile agents assign the information (40-50-INFO-1, 40-50-INFO-2, 40-50-INFO-3, 40-50-INFO-4, 40-50-INFO-5, 40-50-INFO-6) that the operator has about the terminal (50) to this diagnosis mobile agent (20-d). Specifically, they assign said information to the subfields (104-21, 104-22, 104-23, 104-24, 104-25, 104-26) described above. As has already been stated, this information relates to different aspects affecting the terminal (50), such as configuration settings (40-50-INFO-1), operational parameters (40-50-INFO-2), software parameters and installation (40-50-INFO-3), firmware and software updates (40-50-INFO-4), application settings (40-50-INFO-5) and user preferences (40-50-INFO-6). The URI identifier of the terminal (50) which is to be diagnosed is assigned in the "terminal URI identifier" field (104-1).

As has been stated, the diagnosis mobile agent server (20) obtains this information from the terminal information database or repository (40). This process is carried out by the means (20-4) for creating and sending diagnosis mobile agents, first accessing the terminal information database or repository (40), using the repository access (30-3), which in turn collects the information of the terminal (50) from the database or repository (40). It should be noted that the process for loading this terminal information database or repository (40) with the pieces of information of the terminals of the operator is outside the scope of this invention.

The diagnosis mobile agent (20-d) is then sent to the corresponding terminal (50). The agent platform (50-2) of the terminal (50) to which the diagnosis mobile agent (20-d) is directed is unequivocally identified in the IP-based network (10) by an identity assigned to the address field (7) of the identifier (AID) (5) of the agent platform (50-2) of the terminal (50) (see Figure 5). In the setting up of the IP connection (50-1, 20-1) between the diagnosis agent server (20) and the terminal (50), a uniform resource identifier URI is assigned to each one (20, 50). Therefore, the respective URI identifiers are assigned in the address field (7) of the identifier (AID) (5) of the agent platform (50-1, 20-1) for the terminal (50) and for the server (20). It should be noted that such URI identifiers can comprise information of the IP addresses that in said IP connection (50-1, 20-1) are assigned to each end, i.e., to the server (20) and terminal (50), respectively.

Once in the corresponding terminal (50) to be diagnosed, the diagnosis mobile agent (20-d) is executed by the agent platform (50-2). Despite its autonomy and its capacity to move, a mobile agent needs the support of an agent platform providing it with the basic services of the system of agents to which it belongs. The agent platform used is outside the scope of this invention. Upon being executed, the diagnosis mobile agent carries out the diagnosis for which it has been sent to the terminal (50). The diagnosis is carried out obtaining the pieces of information comprised in the terminal in question (50-INFO-1, 50-INFO-2, 50-INFO-3, 50-INFO-4, 50-INFO-5, 50-INFO-6) from the terminal registers (50-INFO).

Once the diagnosis has been completely executed, the result of said diagnosis is compared with the information contained in the diagnosis mobile agent (20-d) which had been previously loaded from the information database or repository (40) to the field second "terminal information" field (104-2), upon creating said diagnosis mobile agent (20-d).

If the result of the diagnosis (50-INFO-1, 50-INFO-2, 50-INFO-3, 50-INFO-4, 50-INFO-5, 50-INFO-6) and the information (40-50-INFO-1, 40-50-INFO-2, 40-50-INFO-3, 40-50-INFO-4, 40-50-INFO-5, 40-50-INFO-6) from the database or repository (40) is the same, the diagnosis mobile agent (20-d) notifies the user and the operator of the result of the diagnosis and dies. The process for notifying the user comprises generating a report with the diagnosis and the comparison carried out with the pieces of information from the database or repository, in the form of a file which can be read by the terminal (50) and displaying it to the user on the screen of the terminal. The process for notifying the operator comprises sending the previous report in a message between agents or ACL message to the means (20-4) for creating and sending diagnosis mobile agents of the diagnosis agent server (20).

If, on the contrary, the result of the diagnosis (50-INFO-1, 50-INFO-2, 50-INFO-3, 50-INFO-4, 50-INFO-5, 50-INFO-6) and the information (40-50-INFO-1, 40-50-INFO-2, 40-50-INFO-3, 40-50-INFO-4, 40-50-INFO-5, 40-50-INFO-6) from the database or repository (40) is different, the diagnosis mobile agent (20-d) notifies the user and the operator of the result of the diagnosis. The comparison can indicate one or several different pieces of information between the data comprised in the terminal (50) itself and those comprised in the database or repository (40). The process for notifying the user comprises generating a report with the diagnosis and the comparison carried out with the pieces of information from the database or repository, in the form of a file which can be read by the terminal (50) and displaying it to the user on the screen of the terminal. The process for notifying the operator comprises sending the previous report in a message between agents or ACL message to the means (20-4) for creating and sending diagnosis mobile agents of the diagnosis agent server (20) and the order to the repairing mobile agent server (30) of sending a specific repairing mobile agent (30-REP-1, 30-REP-2, ..., 30-REP-i) to solve the cause for which both pieces of information are different. This latter process comprises sending the order for sending a specific repairing mobile agent for the information which must be repaired, plus the diagnosis information of the specific information which must be repaired, plus the URL identifier of the agent platform (50-2) of the terminal (50) to which the repairing mobile agent is directed, to the means (30-4) for creating and sending repairing mobile agents of the repairing agent server (30) within one message between agents or ACL message,

For example, if the result of the diagnosis (50-INFO-1) and the information (40-50-INFO-1) from the database or repository (40) is different in one aspect (in this case, the terminal configuration settings), several aspects, a repairing mobile agent (30-REP-1) for the configuration settings is sent.

If the result of the diagnosis and the information from the database or repository (40) is different in several aspects (the terminal configuration settings (50-INFO-1) and the terminal operational parameters (50-INFO-2), for example), the diagnosis mobile agent (20-d) sends to the repairing mobile agent server (30) as many orders for sending specific repairing mobile agents (in this case, two) (30-REP-1, 30-REP-2) as differences found.

When the repairing mobile agent server (30) receives the order from the diagnosis mobile agent (20-d) of sending a specific repairing mobile agent (the repairing mobile agent for the configuration settings, for example), the repairing mobile agent server (30) creates this repairing agent (30-REP-1) by its means (30-4) for creating and sending repairing mobile agents.

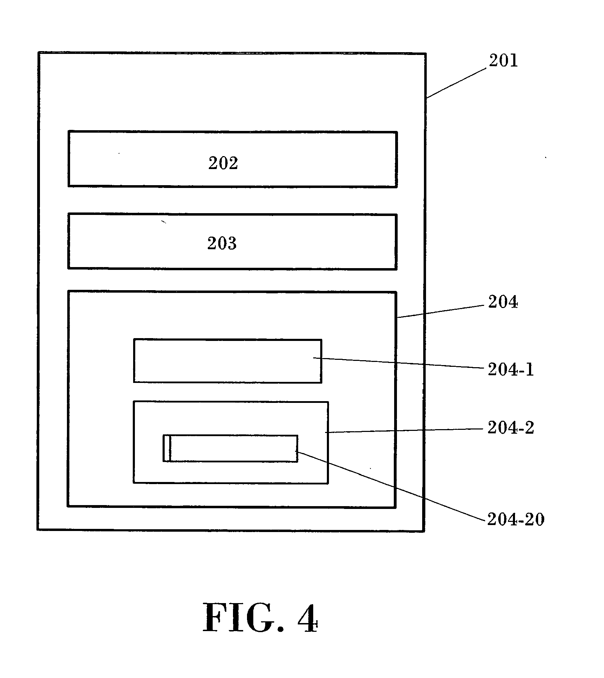

Figure 4 shows the structure (201) of a repairing mobile agent (30-REP-1). Like the conventional structure (1) of a mobile agent shown in Figure 2, and like the structure (101) of a diagnosis mobile agent shown in Figure 3, the structure (201) of a repairing mobile agent comprises a "code" field (203) of the repairing mobile agent, an "identifier" field (202) of the repairing mobile agent and an "additional data" field (204) of the repairing mobile agent, comprising necessary information for executing the repairing agent.

As shown in Figure 4, the "additional data" field (204) in turn comprises a first "terminal URI identifier" field (204-1), to which the URI identifier of the terminal to be repaired is assigned, to which the repairing mobile agent is directed, and a second "terminal information" field (204-2). This field (204-1) in turn comprises a subfield (204-20) designed to comprise the specific information which must be repaired in a terminal (50). This subfield (204-20) is loaded with the data that the operator has stored in the terminal information database or repository (40). This process is carried out by the means (30-4) for creating and sending repairing mobile agents, first accessing the terminal information database or repository (40), using the repository access (30-4), which in turn collects the information of the terminal (50) from the database or repository (40). As stated above, the process for loading this terminal device information database or repository (40) with the pieces of information of the terminals of the operator is outside the scope of this invention.

Therefore, the specific information relating to this information (in the case of this example, of the configuration settings) (40-50-INFO-1) that the operator has about the terminal (50) in question is assigned or loaded to this repairing mobile agent (30-REP-1) in the subfield (204-20). Furthermore, the means (30-4) for creating and sending repairing mobile agents also load the URI identifier of the terminal (50) in the field (204-1).

The repairing mobile agent (30-REP-1) is then sent to the corresponding terminal (50). The agent platform (50-2) of the terminal (50) to which the repairing mobile agent (30-REP-1) is directed is unequivocally identified in the IP-based network (10) by an identity assigned to the address field (7) of the identifier (AID) (5) of the agent platform (50-2) of the terminal (50) (see Figure 5). In the setting up of the IP connection (50-1, 30-1) between the repairing agent server (30) and the terminal (50), a uniform resource identifier URI is assigned to each one (30, 50). Therefore, the respective URI identifiers are assigned in the address field (7) of the identifier (AID) (5) of the agent platform (50-1, 30-1) for the terminal (50) and for the server (30). It should be noted that such URI identifiers can comprise information of the IP addresses that in said IP connection are assigned to each end, i.e., to the server (30) and terminal (50), respectively.

Once the specific repairing mobile agent (30-REP-1) reaches the corresponding terminal (50), said repairing mobile agent (30-REP-1) is executed by the agent platform (50-2) of the terminal (50). Upon being executed, the repairing mobile agent (30-REP-1) repairs and manages the specific information that the diagnosis mobile agent (20-d) had previously detected. This process consists of saving the information (40-50-INFO-1) comprised in the subfield (204-20) of the repairing mobile agent (30-REP-1) in the register (50-INFO-1) of the pieces of terminal information (50-INFO). For example, in the case of a repairing mobile agent for configuration settings, such agent repairs and manages the configuration settings according to the device information stored in the terminal information database or repository (40).

This process of sending orders for sending specific repairing mobile agents (30-REP-1, 30-REP-2, ..., 30-REP-i) to a terminal (50) by the diagnosis mobile agent (20-d) towards the repairing mobile agent server (30) is repeated as many times as differences have been found with respect to the information from the database or repository (40) during the diagnosis.

Once the repair and management of the information of the terminal (50) has ended, the repairing mobile agent (30-REP-1) informs the user and the network. The process for informing the user comprises generating a report with the repaired information in the form of a file which can be read by the terminal (50) and displaying it to the user on the screen of the terminal. The process for informing the operator comprises sending the previous report in a message between agents or ACL message to the means (30-4) for creating and sending repairing mobile agents of the repairing agent server (30).

As has been explained, this invention defines a system and process for diagnosing and managing devices, based on mobile agent technology. The system is formed by diagnosis and repairing mobile agents, servers managing such agents and ordering their sending to the devices, devices with an agent platform, pieces of device information and a repository storing the pieces of information of the devices of an operator. The process consists of sending a diagnosis mobile agent to a device by the operator, carrying out the diagnosis in said device and, depending on the result of the comparison with the information that the operator has in a device information repository, sending a repairing mobile agent to repair and manage the defective information.

This new system for diagnosing and managing devices is furthermore valid for any device with Internet connection, both for mobile or cellular devices which can connect to mobile or cellular data networks, such as GPRS or UMTS for example, and for fixed devices with Internet connection.

In view of this description and set of drawings, persons skilled in the art can understand that the invention has been described according to several preferred embodiments thereof, but that multiple variations can be introduced in said preferred embodiments, without departing from the object of the invention as it has been claimed.

## Claims

1. A method for managing terminals of an IP network comprising at least one terminal, wherein said at least un terminal in turn comprises a mobile agent platform and at least one piece of data (50-INFO-1, 50-INFO-2, 50-INFO-3, 50-INFO-4, 50-INFO-5, 50-INFO-6) about the terminal itself, **characterized by** comprising the steps of:
- in a diagnosis mobile agent server (20), creating a diagnosis mobile agent (20-d) comprising at least one piece of information (40-50-INFO-1, 40-50-INFO-2, 40-50-INFO-3, 40-50-INFO-4, 40-50-INFO-5, 40-50-INFO-6) about a terminal (50) of the network;
- sending said diagnosis mobile agent (20-d) to said terminal (50);
- executing said diagnosis mobile agent (20-d) in said terminal (50) such that said at least one piece of data (50-INFO-1, 50-INFO-2, 50-INFO-3, 50-INFO-4, 50-INFO-5, 50-INFO-6) about the terminal (50) is obtained;
- comparing said at least one piece of data (50-INFO-1, 50-INFO-2, 50-INFO-3, 50-INFO-4, 50-INFO-5, 50-INFO-6) with the information (40-50-INFO-1, 40-50-INFO-2, 40-50-INFO-3, 40-50-INFO-4, 40-50-INFO-5, 40-50-INFO-6) comprised in the diagnosis mobile agent (20-d).

2. A method according to claim 1, **characterized by** the fact that said information (40-50-INFO-1, 40-50-INFO-2, 40-50-INFO-3, 40-50-INFO-4, 40-50-INFO-5, 40-50-INFO-6) comprised in the diagnosis mobile agent (20-d) is downloaded from information storage means (40).

3. A method according to any of claims 1 or 2, **characterized by** the fact that said step of sending said diagnosis mobile agent (20-d) to said terminal (50) comprises the step of assigning to a field (102) of the diagnosis mobile agent (20-d) an identifier of the mobile agent platform (50-2) of the terminal (50).

4. A method according to claim 3, **characterized by** the fact that said identifier of the mobile agent platform (50-2) of the terminal (50) is a uniform resource identifier.

5. A method according to claim 4, **characterized by** the fact that said uniform resource identifier comprises information of the IP addresses assigned to the diagnosis mobile agent server (20) and to the terminal (50).

6. A method according to any of the previous claims, **characterized by** the fact that, if the result of said comparison indicates that all the information (40-50-INFO-1, 40-50-INFO-2, 40-50-INFO-3, 40-50-INFO-4, 40-50-INFO-5, 40-50-INFO-6) comprised in the diagnosis mobile agent (20-d) is the same as all the data (50-INFO-1, 50-INFO-2, 50-INFO-3, 50-INFO-4, 50-INFO-5, 50-INFO-6) of the terminal (50), the diagnosis mobile agent (20-d) notifies the user of the terminal (50) and the operator providing the services to the terminal (50) of the result of the diagnosis and dies.

7. A method according to any of claims 1 to 5, **characterized by** the step of, if the result of said comparison indicates that at least one piece of information (40-50-INFO-1, 40-50-INFO-2, 40-50-INFO-3, 40-50-INFO-4, 40-50-INFO-5, 40-50-INFO-6) comprised in the diagnosis mobile agent (20-d) is different from the corresponding piece of data (50-INFO-1, 50-INFO-2, 50-INFO-3, 50-INFO-4, 50-INFO-5, 50-INFO-6) of the terminal (50), the diagnosis mobile agent (20-d) notifies the user of the terminal (50) and the operator providing the services to the terminal (50) of the result of the diagnosis.

8. A method according to any of claims 1 to 5, **characterized by** the step of, if the result of said comparison indicates that at least one piece of information (40-50-INFO-1, 40-50-INFO-2, 40-50-INFO-3, 40-50-INFO-4, 40-50-INFO-5, 40-50-INFO-6) comprised in the diagnosis mobile agent (20-d) is different from the corresponding piece of data (50-INFO-1, 50-INFO-2, 50-INFO-3, 50-INFO-4, 50-INFO-5, 50-INFO-6) of the terminal (50):
- in a repairing mobile agent server (30), creating as many repairing mobile agents (30-REP-1, 30-REP-2, 30-REP-3, 30-REP-4. 30-REP-5, 30-REP-6) as different pieces of information have been obtained in said comparison, wherein each repairing mobile agent (30-REP-1, 30-REP-2, 30-REP-3, 30-REP-4, 30-REP-5, 30-REP-6) comprises one piece of information (40-50-INFO-1, 40-50-INFO-2, 40-50-INFO-3, 40-50-INFO-4, 40-50-INFO-5, 40-50-INFO-6) about the aspect the comparison of which in the diagnosis has been negative;
- sending said at least one repairing mobile agent (30-REP-1, 30-REP-2, 30-REP-3, 30-REP-4, 30-REP-5, 30-REP-6) to said terminal (50);
- executing said at least one repairing mobile agent (30-REP-1, 30-REP-2, 30-REP-3, 30-REP-4, 30-REP-5, 30-REP-6) in said terminal (50) such that the information (40-50-INFO-1, 40-50-INFO-2, 40-50-INFO-3, 40-50-INFO-4, 40-50-INFO-5, 40-50-INFO-6) comprised in each of the at least one repairing mobile agent (30-REP-1, 30-REP-2, 30-REP-3, 30-REP-4, 30-REP-5, 30-REP-6) is loaded in the terminal (50), substituting the incorrect piece of data (50-INFO-1, 50-INFO-2, 50-INFO-3, 50-INFO-4, 50-INFO-5, 50-INFO-6).

9. A method according to claim 8, **characterized by** the fact that said information (40-50-INFO-1, 40-50-INFO-2, 40-50-INFO-3, 40-50-INFO-4, 40-50-INFO-5, 40-50-INFO-6) comprised in the repairing mobile agent (30-REP-1, 30-REP-2, 30-REP-3, 30-REP-4, 30-REP-5, 30-REP-6) is downloaded from information storage means (40).

10. A method according to any of claims 8 or 9, **characterized by** the fact that said step of sending said at least one repairing mobile agent (30-REP-1, 30-REP-2, 30-REP-3, 30-REP-4, 30-REP-5, 30-REP-6) to said terminal (50) comprises the step of assigning to a field (202) of the repairing mobile agent (30-REP-1, 30-REP-2, 30-REP-3, 30-REP-4, 30-REP-5, 30-REP-6) an identifier of the mobile agent platform (50-2) of the terminal (50).

11. A method according to claim 10, **characterized by** the fact that said identifier of the mobile agent platform (50-2) of the terminal (50) is a uniform resource identifier.

12. A method according to claim 11, **characterized by** the fact that said uniform resource identifier comprises information of the IP addresses assigned to the repairing mobile agent server (30) and terminal (50).

13. A method according to any of claims 2 or 9, **characterized by** the fact that said information storage means (40) comprise an information database or repository.

14. A method according to any of the previous claims, **characterized by** the fact that said information (40-50-INFO-1, 40-50-INFO-2, 40-50-INFO-3, 40-50-INFO-4, 40-50-INFO-5, 40-50-INFO-6) about the terminal (50) comprises information about at least one of the following aspects: the terminal configuration settings, the terminal operational parameters, software parameters and installation, firmware and software updates, application settings or user preferences.

15. A terminal (50) for an IP network comprising at least one mobile agent platform (50-2), **characterized by** further comprising means designed to execute at least one diagnosis (20-d) or repairing (30-REP-1, 30-REP-2, ..., 30-REP-i) mobile agent in said mobile agent platform (50-2).

16. A network comprising at least one terminal (50) according to claim 15.

17. A diagnosis mobile agent server (20) comprising:
- a mobile agent platform (20-2);
- connecting means (20-1) for the connection to an IP network;
**characterized by** comprising means (20-4) for creating at least one diagnosis mobile agent (20-d) configured to be sent through said connecting means (20-1) for the connection to a terminal connected to said IP network.

18. A server according to claim 17, **characterized by** further comprising means (20-3) for accessing information storage means.

19. A repairing mobile agent server (30) comprising:
- a mobile agent platform (30-2);
- connecting means (30-1) for the connection to an IP network;
**characterized by** comprising means (30-4) for creating at least one repairing mobile agent (30-REP-1, 30-REP-2, ..., 30-REP-i) configured to be sent through said connecting means (30-1) for the connection to a terminal connected to said IP network.

20. A server according to claim 19, **characterized by** further comprising means (30-3) for accessing information storage means.

21. A system comprising:
- an IP network (10);
- a plurality of terminals (50, 60, ..., j);
**characterized by** further comprising:
- a diagnosis mobile agent server (20) according to claim 17.

22. A system according to claim 21, **characterized by** further comprising a repairing mobile agent server (30) according to claim 19.

23. A system according to any of claims 21 or 22, **characterized by** further comprising information storage means (40), which information relates to said terminals (50, 60..., j).
